Europäisches Patentamt

European Patent Office

Office européen des brevets

(19)

(11) Publication number : **0 484 144 A2**

## (12) EUROPEAN PATENT APPLICATION

(21) Application number : 91310044.2

(22) Date of filing : 30.10.91

(51) Int. Cl.⁵ : **H04N 9/79**

(30) Priority : **31.10.90 JP 294093/90**

(43) Date of publication of application :
**06.05.92 Bulletin 92/19**

(84) Designated Contracting States :
**DE FR GB**

(71) Applicant : **SONY CORPORATION**
**7-35 Kitashinagawa 6-Chome Shinagawa-ku**
**Tokyo 141 (JP)**

(72) Inventor : **Yamamura, Takaya, c/o Patents Div.,**
**Sony Corp.**
**6-7-35 Kitashinagawa, Shinagawa-ku**
**Tokyo 141 (JP)**

(74) Representative : **Thomas, Christopher Hugo et**
**al**
**D Young & Co 10 Staple Inn**
**London WC1V 7RD (GB)**

(54) **Video signal processing methods and apparatus.**

(57)  A video tape reproducing apparatus for reproducing a video signal from a tape (15) having recorded thereon a video signal which comprises a time-division multiplexed video signal comprising a line-sequentialized chrominance signal, a colour video signal, a sync signal, a burst signal and a clamp level signal, the video signal having been recording on the tape (15) after being frequency modulated, the apparatus comprises heads (14A, 14B) for scanning the tape (15), circuits (26A, 26B) for frequency-demodulating a reproduced video signal derived from the heads (14A, 14B), a clamp circuit (28) for clamping a portion between the burst signal and the line-sequentialized chrominance signal of the frequency-demodulated reproduced video signal, and circuits (29 to 38) for forming a replica of an original video signal from the reproduced video signal supplied by the clamp circuit (28). The invention also relates to the formation of such a signal for recording.

EP 0 484 144 A2

FIG.4

This invention relates to video signal processing methods and apparatus.

In a video tape recorder (VTR) for receiving and recording a high definition television signal broadcast, for example, from a broadcasting satellite, it has been usual for a luminance signal and chrominance signal line-sequentially received together with an audio signal, to be re-arranged line sequentially, frequency-modulated (FM), and then recorded on a magnetic tape.

In such a VTR, the luminance signal Y and the chrominance signal C extracted from the high definition television signal are recorded, together with a reproduction reference signal for the VTR in at least every horizontal scan period.

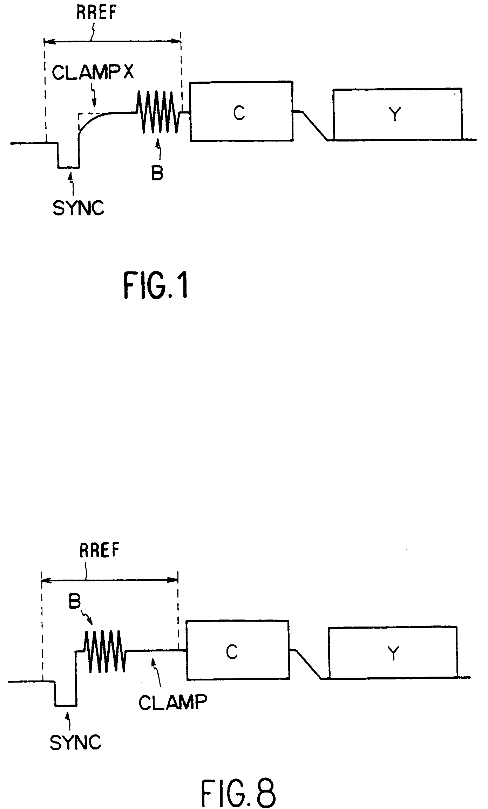

As shown in Figure 1, the reproduction reference signal RREF includes a synchronizing signal SYNC, a clamp level signal CLAMPX and a burst signal B in that order, and is detected in a portion preceding the chrominance signal C and the luminance signal Y in reproduction.

The synchronizing signal SYNC, the clamp level signal CLAMPX and the burst signal B are read sequentially from a read only memory and added to the video signal. For example, the synchronizing signal data are stored in addresses 0 to 21 of the memory, the clamp level data in addresses 22 to 35, and the burst signal data in addresses 36 to 62.

The frequency characteristics of such a VTR are usually not stable, due to variations in the circuit constants of a high frequency emphasis circuit used in video signal recording, and of a re-emphasis circuit used for demodulating the video signal in reproduction.

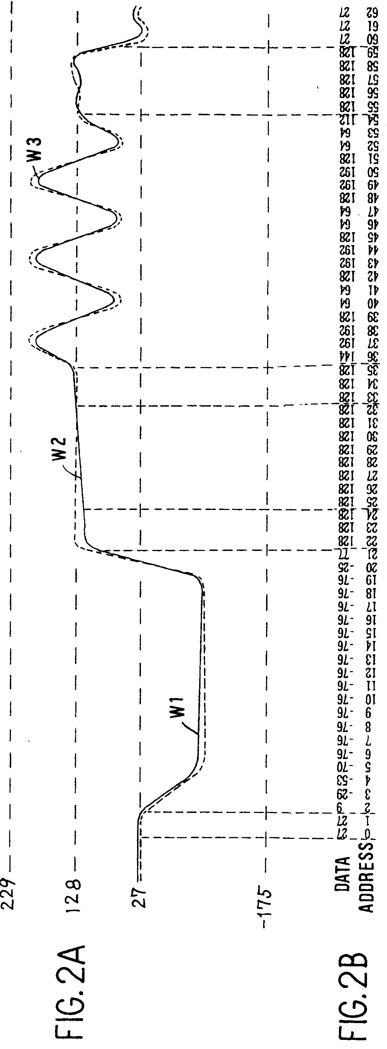

Therefore, as shown by a solid line in Figure 2A, a clamp level waveform W2 immediately after the synchronizing signal W1 becomes lower in signal level than that of a reproduced signal waveform (shown by a dotted line in Figure 2A) with a constant frequency characteristic, due to a low frequency component of the synchronizing signal.

Such reduction in the level of the clamp level waveform W2 causes reduction in the clamp accuracy of the video signal.

According to the present invention there is provided a method of generating a colour video signal to be recorded on a tape recording medium, the method comprising the steps of:
providing a sync signal;
providing a burst signal following said sync signal;
providing a time-division multiplexed video signal following said burst signal; and
providing a clamp level signal between said burst signal and said time-division multiplexed video signal.

According to the present invention there is also provided a video tape reproducing apparatus for reproducing a video signal from a tape recording medium having recorded thereon a video signal which comprises a time-division multiplexed video signal time-division multiplexed with a line-sequentialization chrominance signal and a colour video signal, a sync signal, a burst signal and a clamp level signal, said video signal having been recording on said tape recording medium after being frequency modulated, the apparatus comprising:
head means for scanning said tape recording medium;
means for frequency-demodulating a reproduced video signal derived from said head means;
clamp means for clamping a portion between said burst signal and said line-sequentialization chrominance signal of said frequency-demodulated reproduced video signal; and
means for forming a replica of an original video signal from the reproduced video signal supplied by said clamp means.

An embodiment of the invention may comprise video signal processing apparatus in which, in recording line-sequentially inputted video signals including chrominance signals and luminance signals, a reproduction reference signal including a synchronizing signal, a clamp level signal CLAMP and a burst signal is added to the video signal in at least every horizontal scan period and, in reproducing the video signal, a reproduction level of the video signal is set according to a clamp level of the clamp level signal detected in the reproduced video signal, the clamp level signal of the reproduction reference signal being added to an end portion of the burst signals in recording.

It is possible to reduce interference with a low frequency component of the synchronizing signal and improve a clamp level accuracy of the clamp level signal by providing the clamp level signal of the reproduction reference signal following the burst signal in recording, and by detecting the clamp level from the reproduced video signals sequentially read out in reproducing.

The invention will now be described by way of example with reference to the accompanying drawings, throughout which like parts are referred to by like references, and in which:

Figures 1, 2A and 2B show waveforms for explanation of a reproduction reference signal;
Figures 3 and 4 are block diagrams showing a recording circuit section and a reproducing circuit section forming a VTR and according to the present invention;
Figure 5 is a block diagram of a reference signal adding circuit;
Figure 6 is a block diagram of a reproduction signal processing circuit; and
Figures 7A, 7B and 8 show signal waveforms for explanation of the reproduction reference signal.

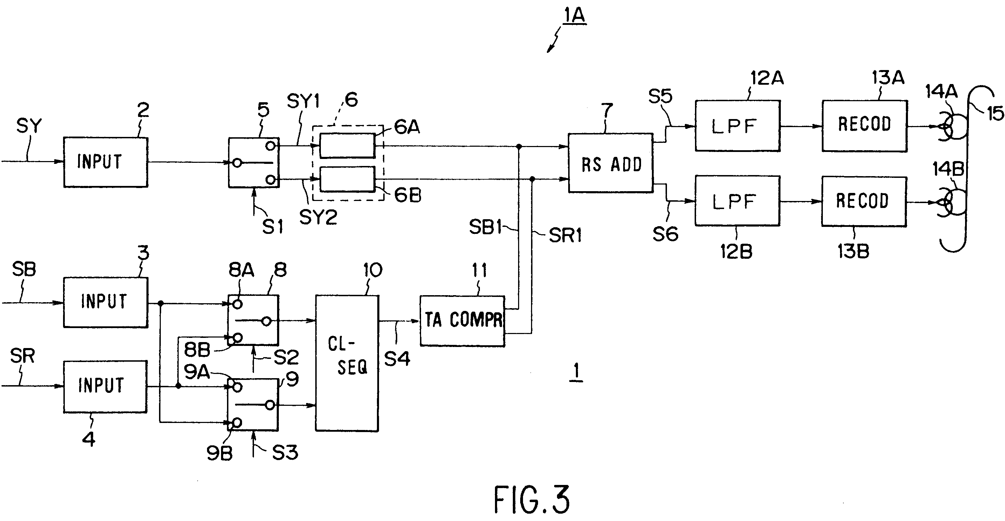

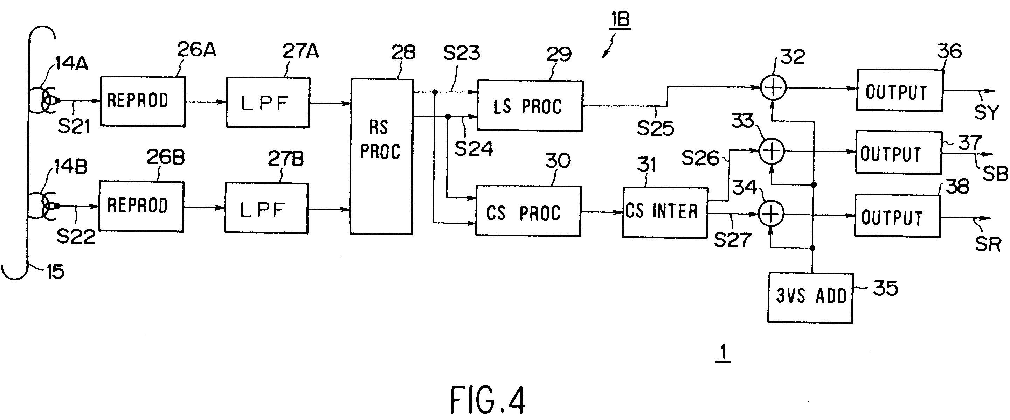

In Figures 3 and 4, a VTR 1 comprises a recording circuit section 1A (Figure 3) and a reproduction circuit section 1B (Figure 4).

The recording circuit section 1A includes input circuits 2, 3 and 4 including low-pass filters and analogue/digital (A/D) converters.

The input circuits 2, 3 and 4 serve to sample a luminance video signal SY and chrominance signals SB and SR at a predetermined timing, respectively.

The input circuit 2 converts the luminance signal SY into a digital signal and supplies it to a time axis expansion circuit 6 through a switching circuit 5.

The switching circuit 5 distributes the luminance signal SY to respective channels according to a timing signal S1 assigning channels every even/odd numbered line, and provides them as channel luminance signals SY1 and SY2.

The time axis expansion circuit 6 responds to the channel luminance signals SY1 and SY2 inputted to time axis expansion circuits 6A and 6B, to expand their time axes using internal memories, and outputs them to a reference signal adding circuit 7.

The input circuits 3 and 4 convert the chrominance signals SB and SR into respective digital signals, supply the chrominance signal SB to input terminals 8A and 9B of switching circuits 8 and 9, and supplies the chrominance signal SR to input terminals 9A and 8B.

The switching circuits 8 and 9 respond to timing signals S2 and S3 to switch channels at predetermined timings, and supply the chrominance signals SB and SY to a chrominance line-sequence circuit 10. The line-sequence circuit 10 converts the chrominance signals SB and SR using vertical filters, into a chrominance line-sequence signal S4, and supplies it to a time axis compression circuit 11. The time axis compression circuit 11 distributes the chrominance line-sequence signal S4 to two channels of a signal line, compresses the time axis using its internal memory, and supplies it to the reference signal adding circuit 7.

The reference signal adding circuit 7 adds a synchronizing signal, a burst signal and a clamp level (area) signal to a time-division multiplexed video signal produced by time axis multiplexing the luminance signals SY1 and SY2, whose time axis are expanded, and the chrominance line-sequence signals SB1 and SR1, whose time axes are compressed, converts it into an analogue signal and supplies recording video signals S5 and S6.

The recording video signals S5 and S6 are passed through low-pass filters 12A and 12B and recording circuits 13A and 13B, and then recorded on a magnetic tape 15 by magnetic heads 14A and 14B, respectively.

The recording circuits 13A and 13B include emphasis circuits and FM circuits, respectively, and function to compensate for high frequency components of the recording video signals S5 and S6, and to frequency-modulate them.

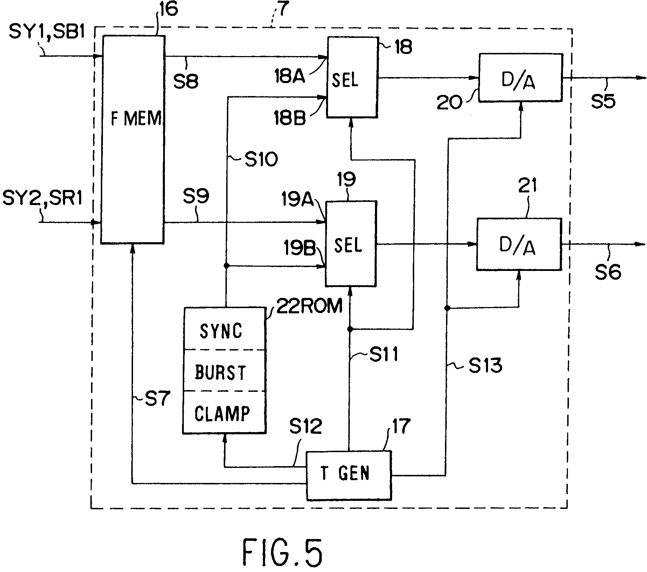

The reference signal adding circuit 7 includes a frame memory 16 as shown in Figure 5, and functions to rearrange and output the colour line-sequence signal data stored sequentially therein according to address information of a read clock S7 supplied from a timing generating circuit 17.

In the reference signal adding circuit 7, the time-division multiplexed video signal data S8 and S9 thus read out are passed through selector circuits 18 and 19, converted by D/A converters 20 and 21 into analogue signals, and outputted as the recording video signals S5 and S6.

The selector circuits 18 and 19 receive at input terminals 18A and 19A thereof the time-division multiplexed video signal data S8 and S9, and at input terminals 18B and 19B the reproduction reference signal S10 from the read only memory (ROM) 22.

The selector circuits 18 and 19 select the reproduction reference signal S10 or the time-division multiplexed video signal data S8 and S9 at a timing corresponding to a start of the horizontal scan period H, according to a selection signal S11 supplied from the timing generation circuit 17.

The ROM 22 stores the synchronizing signal data SYNC, the burst signal data BURST and the clamp level data CLAMP in the predetermined addresses, respectively.

The ROM 22 reads the data sequentially according to addresses given by a reference data read out signal S12 supplied from the timing generation circuit 17, and outputs them as the reference data signal S10.

The D/A converters 20 and 21 convert digital data into analogue signals at a timing of a reference clock S13 supplied from the timing generation circuit 17.

The reproduction circuit portion 1B functions to read, in reproducing a video signal, the video signal recorded on the tape 15 sequentially through heads 14A and 14B as the reproduced video signal S21 and S22, as shown in Figure 4.

The reproducing circuit section 1B functions to send the reproduced video signals S21 and S22 through reproduction circuits 26A and 26B and low-pass filters 27A and 27B to a reproduced signal processing circuit 28, sequentially.

The reproduction circuits 26A and 26B include de-emphasis circuits and frequency demodulation circuits, respectively, and function to compensate for high frequency components of the reproduced video signals S21 and S22.

The reproduced signal processing circuit 28 converts the reproduced video signals S21 and S22 into digital data, removes jitters thereof, returns the rearrangement in the frame memory to the original arrangement, compensates for reproduction signal drop-out and outputs them as reproduced time-division multiplexed signals S23 and S24.

A luminance signal processing circuit 29 derives a luminance signal portion from the reproduced time-division multiplexed signals S23 and S24 supplied from the reproduced signal processing circuit 28 on the two channels, compresses the time axis thereof using internal memories thereof to recover the original time axes, and inserts them into the luminance signal on one channel.

A chrominance signal processing circuit 30 derives a chrominance signal portion from the reproduced time-division multiplexed signals S23 and S24 from the reproduced signal processing circuit 28, expands the time axes thereof using its internal memories to recover the original time axis, converts it into a chrominance video signal on one channel, and supplies it to a chrominance signal interpolation circuit 31.

The chrominance signal interpolation circuit 31 includes a one horizontal scan period delay circuit and a two horizontal scan period delay circuit connected in parallel to the one scan period delay circuit, and functions to interpolate chrominance video signal dropped from the chrominance line-sequence signal.

Adder circuits 32, 33 and 34 receive sequentially the reproduced luminance video signal S25 and the reproduced chrominance video signals S26 and S27 from the luminance signal processing circuit 29 and the chrominance signal interpolation circuit 31, respectively, and add a synchronizing signal supplied from a three value sync adding circuit 35 thereto.

Output circuits 36, 37 and 38 include respective D/A converters, and convert the reproduced luminance video signal S25 and the reproduced chrominance video signals S26 and S27 into analogue signals and output them as the output luminance signal SY and the output chrominance signals SB and SR, respectively.

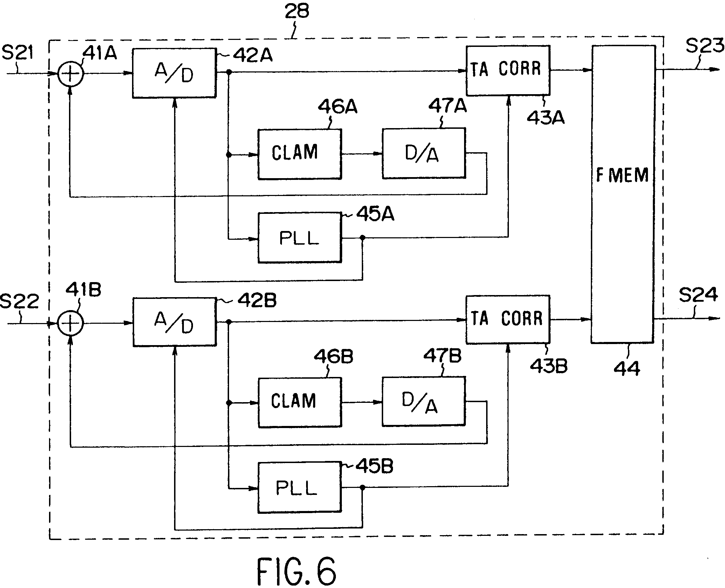

The reproduced signal processing circuit 28 inputs the reproduced video signals S21 and S22 supplied from the low-pass filters 27A and 27B through adder circuits 41A and 41B to A/D converters 42A and 42B, respectively, as shown in Figure 6.

The A/D converters 42A and 42B sequentially convert the analogue reproduced signals into digital data at a predetermined clock rate and supply them to time axis correction devices 43A and 43B. The time axis correction devices 43A and 43B correct time axis variations of digital data supplied thereto sequentially, store them in a frame memory 44 sequentially, and then output them from the frame memory 44 as the reproduced time-division multiplexed signals S23 and S24 at a predetermined timing.

Phase locked loop (PLL) circuits 45A and 45B detect the timing of a synchronizing clock whose time axis is varied from the digital signal supplied from the A/D converters 42A and 42B, and supply a correction clock signal, corrected such that a deviation of it from the reference clock is reduced, to the A/D converters 42A and 42B and the time axis correction devices 43A and 43B.

Clamp circuits 46A and 46B detect a clamp level from the digital signals outputted from the A/D converters 42A and 42B, convert them through D/A converters 47A and 47B into analogue signals and supply values to the adder circuits 41A and 41B large enough to correct the deviation.

With the construction described hereinbefore, the reference signal adding circuit 7 in the recording circuit section 1A (Figure 3) receives the luminance signal SY supplied through the input circuit 2, the switching circuit 5 and the time axis expansion circuit portion 6, and the chrominance line-sequence signals SB1 and SR1 supplied through the input circuits 3 and 4, the switching circuits 8 and 9, the chrominance line-sequence circuit 10 and the time axis compression circuit 11, makes them time-divided and stores them in the frame memory 16 (Figure 5), sequentially.

The reference signal adding circuit 7 reads the video data stored in the frame memory sequentially according to read addresses assigned by the read clock signal S7, and supplies them to the selection circuits 18 and 19.

The selection circuits 18 and 19 convert such video data into analogue signals through the D/A converter circuits 20 and 21, and output them as the recording video signals S5 and S6.

The reference signal adding circuit 7 detects a phase generator (PG) signal from a pulse generator of the timing generator circuit 17, and supplies the reference data read signal S12 and the selection switching signal S11 to the ROM 22 and the selection circuits 18 and 19.

The ROM 22 outputs the reproduction reference signal data S10 according to addresses given by the reference data read signal S12 through the selection circuits 18 and 19.

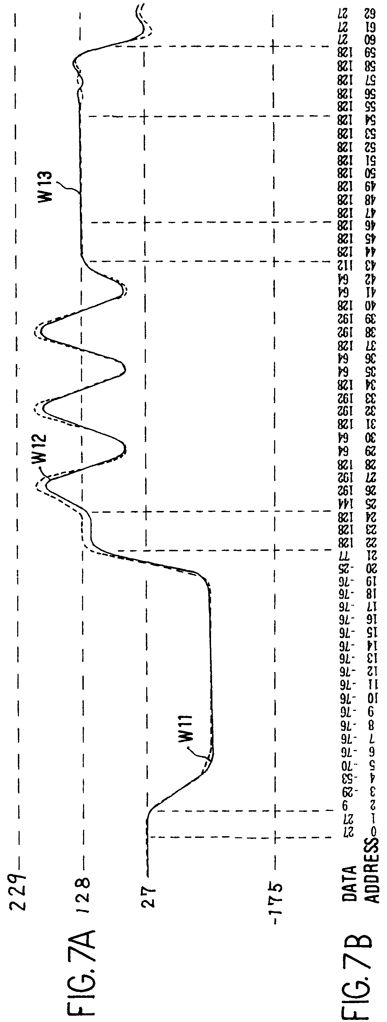

The reproduction reference signal data S10 is stored in addresses 0 to 21 of the ROM 22 as synchronizing signal waveform data, in addresses 22 to 43 as burst signal waveform data, and in addresses 44 to 62 as clamp level data, as shown in Figure 7B.

The timing generator circuit 17 outputs the selection switching signal S11 a predetermined time from the start of reading of the reproduction reference signal data S10 from the ROM 22 to switch the outputs of the selector circuits 18 and 19 from the reproduction reference signal data S10 to the time-division multiplexing video signal data S8 and S9.

After a predetermined time has elapsed, the timing generator circuit 17 switches the output signal from the time-division multiplexing video signal data S8 and S9 to the reproduction reference signal S10 by the selection switching signal S11.

The reference adding circuit 7 adds data providing the synchronizing signal data, the burst signal data and the clamp level data sequentially in every horizontal scan period, by repeating the switching between the outputs of the selection circuits 18 and 19 at a predetermined clock timing provided by the timing generator circuit 17, and outputs them through the D/A converters 20 and 21.

Thus, the recording circuit section 1A compensates the waveform of the recording video signals S5 and S6 having the clamp level signal CLAMP between the burst signal B and the chrominance video signal C by means of the low-pass filters 12A and 12B and the recording circuits 13A and 13B, and records them on the tape 15 through the heads 14A and 14B (Figure 8).

In reproduction, the reproduction circuit section 1B (Figure 4) reads the reproduced video signal in the reproduced video signal processing circuit 28 from the tape 15 through the heads 14A and 14B and the reproduction circuits 26A and 26B and the low-pass filters 27A and 27B, sequentially.

The reproduced video signal processing circuit 28 fixes the clamp levels of the reproduced video signals S21 and S22 to predetermined levels in the adder circuits 41A and 41B, and then converts them into digital data through the A/D converter circuits 42A and 42B, and stores them in the frame memory 44 sequentially through the time axis correction circuits 43A and 43B.

The clamp levels of the reproduced video signals S21 and S22 inputted to the A/D converters 42A and 42B are stable as shown by a solid line in Figure 7A even when the frequency characteristics are not constant due to variations of circuit constants of the emphasis circuit and de-emphasis circuit included in the recording circuits 13A and 13B and the reproduction circuits 26A and 26B.

Therefore, the reliability of digital data value converted by the A/D converters 42A and 42B is improved.

Although, as shown by a solid line in Figure 7A, a less significant bit portion of the burst signal waveform is dropped at the leading edge of the signal due to low frequency components of the synchronizing signal waveform, no detection error of a burst signal occurs since such burst signal is utilized for phase detection.

The reproduction circuit section 1B sends the two channel video signals read out from the reproduction signal data processing circuit 28 to the luminance signal processing circuit 29 and the chrominance signal processing circuit 30 for correction of time axes.

The reproduction circuit section 1B adds in the adder circuits 32 and 33 the three value sync signal to the reproduction luminance video signal S25 from the luminance signal processing circuit 29, and the reproduction chrominance signal interpolation circuit 31, and outputs them through the output circuits 37 and 38.

With this construction, in which the clamp level signal CLAMP of the reproduction reference signal S10 added to the video signal in every horizontal scan period is added between the burst signal B and the chrominance video signal C, it is possible to make the output level of the clamp level signal CLAMP even when the frequency characteristics are not constant, and thus it is possible to obtain a VTR having high clamp accuracy.

In the described embodiment, the synchronizing signal data, the burst signal data and the clamp level data are written in addresses 0 to 21, 22 to 43 and 44 to 62 of the ROM 22, respectively. However, the invention is not limited thereto, and addresses for the respective waveform data assigned to the ROM and the waveform data themselves can be set in various manners.

In the described embodiment, the digital data for setting the reproduction reference signal are read out from the ROM 22 in sequence of the addresses. However, the invention is not limited thereto, and the read out operation may be not in sequence of addresses if the clamp level data are read such that they are added to an end portion of the burst signal.

Further, in the described embodiment, the luminance video signal is transmitted after the transmission of the chrominance signal. The invention is, however not limited thereto, and is also applicable to a case where the transmission order of the chominance signal and the luminance signal is reversed.

Further, in the described embodiment, the synchronizing signal, the burst signal and the clamp area are added sequentially as the reproduction reference signal. However, the invention is also applicable to a case where a recording is performed with an auxiliary signal added.

## Claims

1. A method of generating a colour video signal to be recorded on a tape recording medium (15), the method comprising the steps of:
   providing a sync signal;
   providing a burst signal following said sync signal;
   providing a time-division multiplexed video signal following said burst signal; and
   providing a clamp level signal between said burst signal and said time-division multiplexed video signal.

2. A method according to claim 1 further comprising the step of:
   emphasizing a high frequency component included in said colour video signal comprising said sync signal, said burst signal, said time-division multiplexed video signal and said clamp level signal.

3. A method according to claim 1 or claim 2 wherein said time-division multiplexed video signal comprises a luminance signal which has been time-expanded and a colour chrominance signal which has been line-sequentialized and time-compressed.

4. A video tape reproducing apparatus for reproducing a video signal from a tape recording medium (15) having recorded thereon a video signal which comprises a time-division multiplexed video signal comprising a line-sequentialized chrominance signal, a luminance signal, a sync signal, a burst signal and a clamp level signal, said video signal having been recorded on said tape recording medium (15) after being frequency modulated, the apparatus comprising:
head means (14A, 14B) for scanning said tape recording medium (15);
means (26A, 26B) for frequency-demodulating a reproduced video signal derived from said head means (14A, 14B);
clamp means (28) for clamping a portion between said burst signal and said line-sequentialization chrominance signal of said frequency-demodulated reproduced video signal; and
means (29 to 38) for forming a replica of an original video signal from the reproduced video signal supplied by said clamp means (28).

5. Apparatus according to claim 4 further comprising:
means (26A, 26B) for de-emphasizing a high frequency component of said reproduced video signal supplied by said head means (14A, 14B).

6. Apparatus according to claim 4 or claim 5 wherein said means (29 to 38) for forming a replica of an original video signal includes:
means (29) for time-compressing the time axis of said luminance signal;
means (30) for time-expanding the time axis of said chrominance signal; and
means (31) for interpolating a chrominance signal from said line-sequentialized chrominance signal.

RREF

CLAMP X

B

SYNC

C

Y

## FIG.1

RREF

B

SYNC

CLAMP

C

Y

## FIG.8

FIG.2A

FIG.2B

229

128

27

-175

W1

W2

W3

DATA
ADDRESS

EP 0 484 144 A2

FIG.3

EP 0 484 144 A2

FIG.4

EP 0 484 144 A2

FIG.5

FIG.6

FIG. 7A

FIG. 7B

EP 0 484 144 A2